# EUROPEAN PATENT APPLICATION

(11) **EP 4 307 006 A1**
(43) Date of publication of application: **17.01.2024**
(21) Application number: 21929749.6
(22) Date of filing: 04.06.2021
(51) Int. Cl.: G01S 17/86

(54) **DETECTION METHOD AND APPARATUS, AND LASER RADAR**

(30) Priority: 11.03.2021 WO PCT/CN2021/080179
(71) Applicant: Suteng Innovation Technology Co., Ltd, Shenzhen, Guangdong 518000 (CN)
(72) Inventor: LI, Yipeng, Shenzhen, Guangdong 518000 (CN); ZHANG, Hankui, Shenzhen, Guangdong 518000 (CN)
(74) Representative: Ran, Handong
(86) International application number: PCT/CN2021/098421
(87) International publication number: WO 2022/188279

(57) **Abstract**

A LiDAR detection method and apparatus and a LiDAR (10). The LiDAR detection method includes: obtaining ambient information of LiDAR (10) (S301); determining a detection mode of the LiDAR (10) based on the ambient information (S302); determining a target detection region of the LiDAR (10) based on the detection mode (S303); determining a working parameter of the LiDAR (10) based on the target detection region (S304); and running, by the LiDAR (10), the working parameter to perform regional detection. The working parameter of the LiDAR (10) can be adjusted based on the detection mode, thereby improving detection flexibility of the LiDAR (10) and also improving detection accuracy of the LiDAR (10) in the target detection region and working efficiency of the LiDAR (10).

## Description

### TECHNICAL FIELD

Embodiments of the present application relate to the field of radar technologies, and specifically, to a detection method and apparatus and LiDAR.

### TECHNICAL BACKGROUND

Currently, because of its excellent characteristics and strong adaptability to an external environment, LiDAR has been widely used in automatic driving, aided driving and other fields.

Existing LiDARs generally maintain fixed working parameters and do not have a capability of dynamically adjusting working parameters, and as a result, the LiDARs maintain the same parameters regardless of types of scenarios, thereby failing to implement flexible detection.

### SUMMARY

One objective of embodiments of the present application is to provide a detection method and apparatus and a solid-state LiDAR, so that a working parameter of the LiDAR can be automatically adjusted based on different scenarios.

According to an aspect of the embodiment of the present application, a detection method is provided, including: obtaining ambient information of a LiDAR; determining a detection mode of the LiDAR based on the ambient information; determining a target detection region of the LiDAR based on the detection mode; determining a scanning parameter of the LiDAR based on the target detection region; and applying, by the LiDAR, the scanning parameter to perform regional detection.

According to another aspect of the embodiment of the present application, a detection apparatus is provided, including: an obtaining unit, configured to obtain ambient information of a LiDAR; a determining unit, configured to determine a detection mode of the LiDAR based on the ambient information, where the determining unit is further configured to determine a target detection region of the LiDAR based on the detection mode, and the determining unit is further configured to determine a scanning parameter of the LiDAR based on the target detection region; and a running unit, configured to apply the scanning parameter to perform regional detection.

According to still another aspect of an embodiment of the present application, a solid-state LiDAR system is provided, including: an emission apparatus, a receiving apparatus, an optical scanning apparatus, a processor, a memory, a communication interface, and a communication bus, where the processor, the memory, and the communication interface complete mutual communication via the communication bus. The emission module is configured to emit a detection laser beam. The receiving module is configured to receive an echo laser beam. The optical scanning apparatus is configured to deflect a detection laser beam to implement scanning, and further configured to receive and deflect the echo laser beam to the receiving module. The memory is configured to store at least one executable instruction, and the executable instruction enables the processor to perform steps of the detection method according to the first aspect of the claims, so that the LiDAR implements the regional detection.

According to yet another aspect of an embodiment of the present application, a computer storage medium is provided. At least one executable instruction is stored in the storage medium, and the executable instruction enables the processor to execute the steps of the foregoing detection method according to the first aspect.

In the embodiments of this application, the ambient information of the LiDAR is obtained, the detection mode of the LiDAR is determined based on the ambient information, the target detection region of the LiDAR is determined based on the detection mode, the scanning parameter of the LiDAR is determined based on the target detection region, and the scanning parameter is applied to perform regional detection. The detection mode of the LiDAR can be determined based on different ambient information, the target detection region of the LiDAR is also adjusted based on the detection mode, and the working parameter of the LiDAR is automatically adjusted based on the target detection region, so that a working state of the LiDAR is automatically changed to a working state suitable for current ambience, thereby improving detection flexibility of the LiDAR and also improving detection accuracy of the LiDAR in the target detection region and working efficiency of the LiDAR.

### BRIEF DESCRIPTION OF THE DRAWINGS

By reading detailed description of preferred embodiments below, various other advantages and benefits become clear to the person skilled in the art. The drawings are only used for an objective of showing the preferred embodiments, and are not considered as a limitation to the present application. In addition, throughout the drawings, the same reference signs are used to represent the same component. In the drawings:
FIG. 1 shows a schematic structural diagram of an application scenario according to an embodiment of the present application;
FIG. 2 shows a schematic diagram of a mounting position of LiDAR according to an embodiment of the present application;
FIG. 3 shows a schematic flowchart of a detection method according to an embodiment of the present application;
FIG. 4a shows a schematic diagram of a detection region corresponding to a far-field detection mode according to an embodiment of the present application;
FIG. 4b shows a schematic diagram of a detection region corresponding to a near-field detection mode according to an embodiment of the present application;
FIG. 5a shows a schematic diagram of an optical path for reducing a vertical view angle of an emitted laser beam of LiDAR according to an embodiment of the present application;
FIG. 5b shows a schematic diagram of an optical path for lowering a direction of an optical axis of an emitted laser beam of LiDAR according to an embodiment of the present application;
FIG. 6 shows a schematic structural diagram of solid-state LiDAR according to an embodiment of the present application;
FIG. 7 shows a schematic flowchart of a detection method based on solid-state LiDAR according to an embodiment of the present application;
FIG. 8 shows a schematic structural diagram of a detection apparatus of LiDAR according to an embodiment of the present application; and
FIG. 9 shows a schematic structural diagram of LiDAR according to an embodiment of the present application.

### DETAILED DESCRIPTION OF EMBODIMENTS

To make the foregoing objectives, characteristics, and advantages of this application more clearly and understandable, the following describes specific embodiments of this application in detail with reference to the accompanying drawings.

Terms "first", "second", "third" and the like in this specification and claims of this application and the foregoing drawings are used to distinguish different objects, instead of describing a specific sequence. In addition, terms "include", "have", and any variant thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

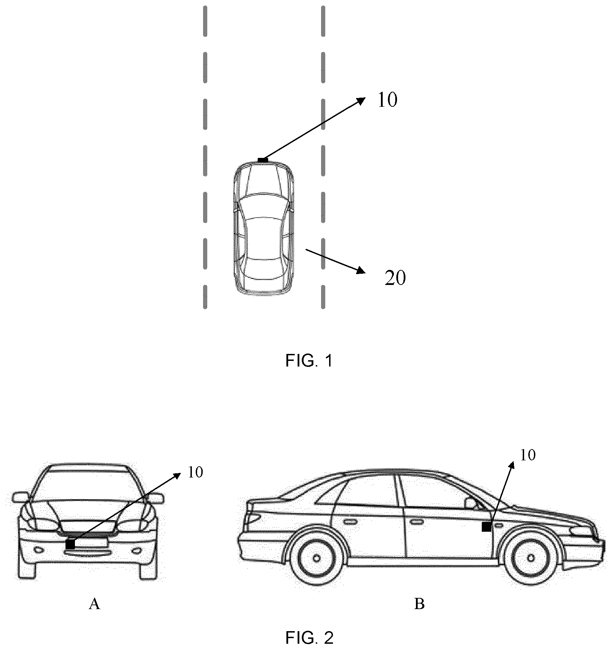

Referring to FIG. 1 and FIG. 2, FIG. 1 is a schematic diagram of an application scenario of a detection method according to an embodiment of this application. The schematic diagram of the application scenario shows LiDAR 10 and a vehicle 20 of the LiDAR. The detection method provided in this application is applied to the LiDAR 10. The LiDAR 10 is mounted on the vehicle 20 of the LiDAR. As shown in FIG. 2, FIG. 2 is a schematic diagram of a mounting position of LiDAR 10 according to an embodiment of this application.

The LiDAR 10 can include solid-state LiDAR of Micro-Electro-Mechanical System (MEMS), rotary mechanical scanning LiDAR, or another type of LiDAR. In this embodiment of this application, an automatic driving sensing system may include one LiDAR 10. Herein, as shown in FIG. 2, when collecting point cloud data, the LiDAR 10 may be mounted at a position marked with A. It can be understood that the LiDAR 10 can also be mounted at a position marked with B. This embodiment of this application imposes no limitation on a specific mounting position of the LiDAR 10.

It can be understood that the detection system in this embodiment of this application may include one or more LiDARs. The detection method in this application may be implemented on all or some of LiDARs in the detection system. This application imposes no limitation on the number of LiDARs for implementing the method.

The vehicle 20 of the LiDAR can work for various transportation. When the vehicle 20 of the LiDAR is a vehicle, the vehicle may include a car, a bus, a semi-trailer, an offroad vehicle, a dedicated vehicle, a truck, a tractor, a dump truck, or any other type of vehicle. A series, type, or model of the vehicle is not limited herein.

Next, a detection method provided in an embodiment of this application is described with reference to both the schematic diagram of the application scenario of the detection method shown in FIG. 1 and the schematic diagram of the mounting position of the LiDAR shown in FIG. 2.

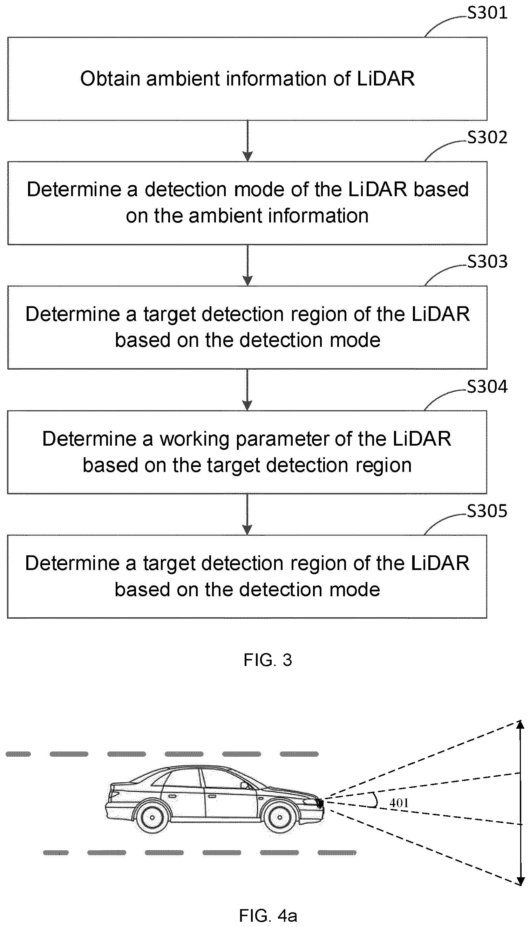

Referring to FIG. 3, FIG. 3 is a schematic flowchart of a detection method according to an embodiment of this application. The method includes the following steps:
S301. Obtain ambient information of a LiDAR.

The LiDAR can be a rotary mechanical LiDAR or a solid-state LiDAR. It can be understood that when the LiDAR is the rotary mechanical LiDAR, 3D ambient information covers a 360° field of view range around the LiDAR; or when the LiDAR is the solid-state LiDAR, the 3D ambient information covers a certain angular range in front of the LiDAR, for example, a detection range of a horizontal angle of view of 120° and a vertical view angle of 25° (-12.5° to +12.5°).

The ambient information of the LiDAR includes operating speed information of a vehicle of the LiDAR and characteristic information of an object detected by the LiDAR. The characteristic information of the object includes geometric position information of the object, speed information of the object, category information of the object, information about the number of objects, and the like.

It can be understood that the ambient information of the LiDAR is obtained in real time.

S302. Determine a detection mode of the LiDAR based on the ambient information.

The detection mode of the LiDAR includes a far-field detection mode and a near-field detection mode.

In an optional embodiment, determining a detection mode of the LiDAR based on the ambient information includes: obtaining the speed information of the vehicle carrying the LiDAR; and when a duration in which the speed information of the vehicle carrying the LiDAR is greater than or equal to a first preset value reaches a preset duration, adjusting the LiDAR to operate in the far-field detection mode; or when a duration in which the speed information of the vehicle is less than the first preset value reaches the preset duration, adjusting the LiDAR to operate in the near-field detection mode.

In another optional embodiment, determining a detection mode of the LiDAR based on the ambient information includes: determining an operating scenario of the LiDAR based on the characteristic information of the object detected by the LiDAR; and determining the detection mode of the LiDAR based on the operating scenario.

Determining an operating scenario of the LiDAR based on the characteristic information of the object detected by the LiDAR includes: obtaining category information of the object detected by the LiDAR; inputting the category information of the object into a trained neural network model to determine a scenario output value; and determining the operating scenario of the LiDAR based on the scenario output value.

It can be understood that determining the detection mode of the LiDAR based on the operating scenario includes: when the operating scenario is an expressway, determining that the detection mode of the LiDAR is the far-field detection mode; or when the operating scenario is an urban road, determining that the detection mode of the LiDAR is the near-field detection mode.

In another optional embodiment, determining a detection mode of the LiDAR based on the ambient information includes: obtaining the characteristic information of the object detected by the LiDAR; determining the number of obstacles within a preset distance around the LiDAR and a speed of the obstacle within the preset distance based on the characteristic information of the object; obtaining the operating speed of the vehicle carrying the LiDAR; and if the operating speed is greater than or equal to a first preset value, the number of the obstacles within the preset distance is less than a second preset value, and the speed of the obstacle within the preset distance is greater than or equal to the first preset value, determining that the LiDAR is in the far-field detection mode; if the operating speed is greater than or equal to the first preset value, the number of the obstacles within the preset distance is greater than or equal to the second preset value, or the speed of the obstacle within the preset distance is less than the first preset value, determining that the LiDAR is in the near-field detection mode; if the operating speed is less than the first preset value, the number of the obstacles within the preset distance is greater than or equal to the second preset value, or the speed of the obstacle within the preset distance is less than the first preset value, determining that the LiDAR is in the near-field detection mode; or if the operating speed is less than the first preset value, the number of the obstacles within the preset distance is less than the second preset value, and the speed of the obstacle within the preset distance is greater than or equal to the first preset value, determining that the LiDAR is in the far-field detection mode.

S303. Determine a target detection region of the LiDAR based on the detection mode.

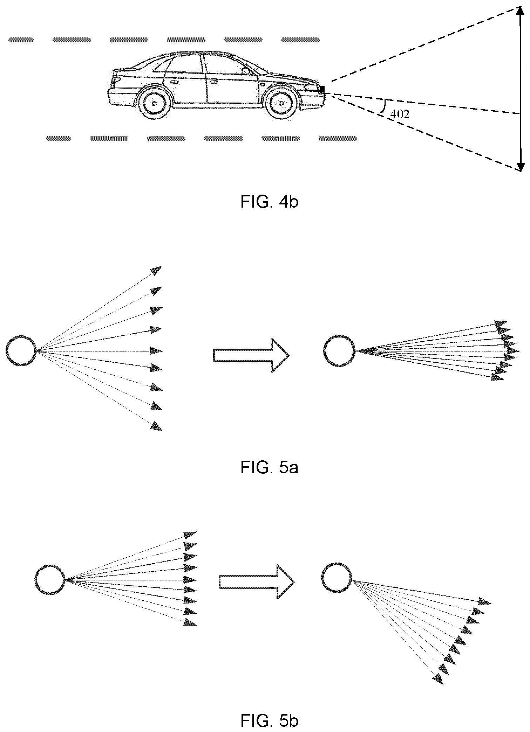

Determining a target detection region of the LiDAR based on the detection mode includes: if the LiDAR is in the far-field detection mode, determining that the target detection region is a first detection region, where the first detection region is a detection region corresponding to a middle-to-far detection field of view; or if the LiDAR is in the near-field detection mode, determining that the target detection region is a second detection region, where the second detection region is a detection region near a vehicle body and the ground. Specifically, as shown in FIG. 4a and FIG. 4b, FIG. 4a shows a vertical view angle 401 corresponding to the target detection region in the far-field detection mode, and FIG. 4b shows a corresponding target detection region 402 in the near-field detection mode.

S304. Determine a working parameter of the LiDAR based on the target detection region.

In an optional embodiment, when the LiDAR is a mechanical LiDAR, working parameters of the LiDAR include but are not limited to one or more of a vertical view angle of an emitted laser beam of the LiDAR, a horizontal angle of view of the emitted laser beam of the LiDAR, an optical direction of the emitted laser beam of the LiDAR, scanning density of the LiDAR, scanning frequency of the LiDAR, and pulse emitting power of the LiDAR.

If the LiDAR is mechanical LiDAR, when the mechanical LiDAR operates in the far-field detection mode, it is determined that the target detection region is the first detection region, that is, a detection region corresponding to a middle-to-far detection field of view, a vertical view angle of the mechanical LiDAR is reduced, pulse emitting frequency of the LiDAR for emitting a laser beam is reduced, and scanning frequency of the LiDAR is increased. As shown in FIG. 5a, for example, reducing the vertical view angle of the emitted laser beam can compress the vertical view angle by 20%, or adjusting the vertical view angle of the LiDAR from +15° to -25° to +12° to -20° can concentrate more beams in a horizontal direction, and increase the front and back detection distance of the LiDAR, so as to detect a long-distance object. Reducing the pulse emitting frequency, for example, adjusting the pulse emitting frequency from 50,000 shots per second to 10,000 shots per second, can increase charging time of a pulse laser transmitter and increase laser energy to detect an object at a farther distance. Increasing the scanning frequency, for example, adjusting the scanning frequency from 10 Hz to 15 Hz, can detect changes of a moving object more quickly, so as to improve safety of automatic driving.

If the LiDAR is the mechanical LiDAR, when the mechanical LiDAR operates in the near-field detection mode, it is determined that the target detection region is the second detection region, that is, a detection region corresponding to a near detection field of view. When a crossroad scenario is detected, the pulse emitting frequency of the LiDAR is increased, the optical direction of the emitted laser beam of the LiDAR is lowered, and the scanning frequency of the LiDAR is increased. Increasing the pulse emitting frequency of the LiDAR, for example, adjusting the pulse emitting frequency from 10,000 shots per second to 50,000 shots per second, can acquire the changes of the surrounding moving objects more quickly. If reducing the direction of the optical axis of the emitted laser beam, as shown in FIG. 5b, for example, moving down the direction of the optical axis of the emitted laser beam by 20°, in a specific application example, deflecting downward the direction of the optical axis of the emitted laser beam from 0° (that is, horizontal emission) to 20°, a detection range of the emitted laser beam is closer to the ground, which can reduce the detection range of the LiDAR, thereby focusing on detecting a short-range object. Increasing the scanning frequency of the LiDAR, for example, adjusting the scanning frequency from 10 Hz to 15 Hz, can detect the changes of the moving object more quickly.

In another optional embodiment, when the LiDAR is a solid-state LiDAR with an optical scanning member, the working parameter includes a scanning parameter of an optical scanning apparatus of the LiDAR; and determining a working parameter of the LiDAR based on the target detection region includes: determining an angle of view range in the target detection region; and reducing a scanning speed of the optical scanning apparatus within the angle of view range based on the angle of view range; or increasing scanning time of the optical scanning apparatus within the angle of view range based on the angle of view range.

Herein, the optical scanning member is configured to deflect a detection laser beam to implement scanning. The optical scanning member may be, for example, a rotary reflector, a rotary prism, a one-dimensional galvanometer, or a two-dimensional galvanometer. This application imposes no limitation on a specific form of the optical scanning member.

S305. The LiDAR applies the working parameter to perform regional detection.

In another optional embodiment of this application, the method further includes: obtaining characteristic information of an object in the target detection region; and further adjusting the working parameters based on the characteristic information of the object in the target detection region.

It can be understood that after the working parameter of the LiDAR is determined, when the LiDAR is actually working, the working parameter of the target detection region can also be further adjusted based on the number of obstacles in the actual target detection region and the speed information of the obstacle.

As an optional manner, for example, the determined target detection region may be divided into N detection sub-regions, and the working parameter of the LiDAR is further adjusted based on the number of obstacles in each detection sub-region and the speed information of the obstacle.

It can be understood that, taking the solid-state LiDAR as an example, if the number of obstacles in an m^{th} detection sub-region exceeds a third preset value and a speed of the obstacle exceeds a fourth preset value, the speed of the optical scanning member corresponding to the m^{th} detection sub-region is further reduced, or scanning time of the optical scanning member within a range corresponding to the m^{th} sub-region is increased.

It can be understood that, in another optional embodiment of this application, in actual application, the LiDAR can also determine a drivable region based on the obtained point cloud data, and the target detection region corresponding to the detection mode is further adjusted based on the drivable region.

In the embodiments of this application, the ambient information of the LiDAR is obtained, the detection mode of the LiDAR is determined based on the ambient information, the target detection region of the LiDAR is determined based on the detection mode, the working parameter of the LiDAR is determined based on the target detection region, and the working parameter is applied to perform regional detection. The detection mode of the LiDAR can be determined based on different ambient information, the target detection region of the LiDAR is also adjusted based on the detection mode, and the working parameter of the LiDAR is automatically adjusted based on the target detection region, so that a working state of the LiDAR is automatically changed to a working state suitable for current ambience, thereby improving detection flexibility of the LiDAR and also improving detection accuracy of the LiDAR in the target detection region and working efficiency of the LiDAR.

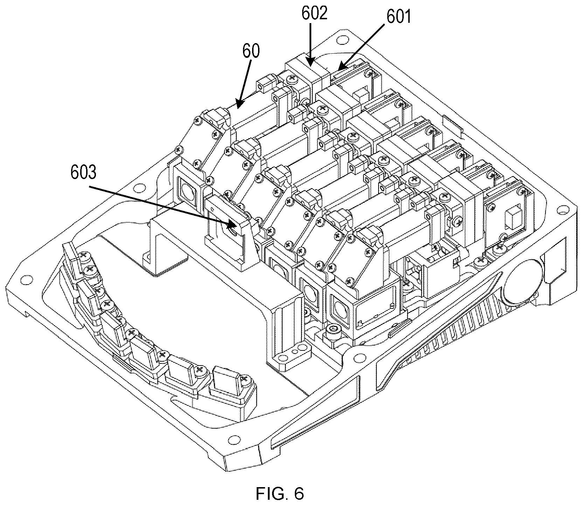

In another optional embodiment, the solid-state LiDAR shown in FIG. 6 serving as an execution body of the detection method is taken as an example for illustration.

The solid-state LiDAR includes at least one transceiving assembly 60. The transceiving assembly 60 includes an emission module 601, a beam splitting module (not shown in the figure), and a receiving module 602. The emission module 601 is configured to emit a detection laser beam to the beam splitting module. The beam splitting module is configured to direct the detection laser beam through the beam splitting module and then outwards, and also configured to deflect a coaxially incident echo laser beam towards the receiving module 602. The receiving module 602 is configured to receive the echo laser beam from the beam splitting module. The detection laser beam emitted by the emission module 601 is emitted into a field of view after passing through the beam splitting module. The echo laser beam is received by the receiving module 602 after being deflected by the beam splitting module.

The solid-state LiDAR also includes a galvanometer scanning module 603. The detection laser beam and the echo laser beam are both emitted to the galvanometer scanning module 603. The galvanometer scanning module 603 performs 2D vibration to deflect the detection laser beam and the echo laser beam to detect the field of view. The detection laser beam from the transceiving assembly is emitted to the galvanometer scanning module 603. The galvanometer scanning module 603 reflects and deflects the detection laser beam outwards to implement scanning. After the echo laser beam returned after being reflected by an object is received by the galvanometer scanning module 603, the echo laser beam is directed to the transceiving assembly, and the transceiving assembly receives the echo laser beam.

The optical path of the detection laser beam and the optical path of the echo laser beam are coaxial, but in opposite directions. For the convenience of description, the optical path of the detection laser beam is taken as an example for description. The galvanometer scanning module 603 includes a 2D galvanometer, and the 2D galvanometer vibrates around a fast axis and a slow axis to implement 2D deflection. The detection laser beam is emitted toward the 2D galvanometer, and the 2D galvanometer reflects and emits the detection laser beam, to cover the vertical and horizontal fields of view, thereby scanning the 2D field of view. The 2D galvanometer vibrates around the fast axis, so that the detection laser beam covers the horizontal field of view; and the 2D galvanometer vibrates around the slow axis, so that the detection laser beam covers the vertical field of view.

The solid-state LiDAR can include one or more transceiving assemblies 60. The specific number of transceiving assemblies 60 included can be determined based on an actual use requirement, which is not limited here. One or more transceiving assemblies 60 share the same galvanometer scanning module 103.

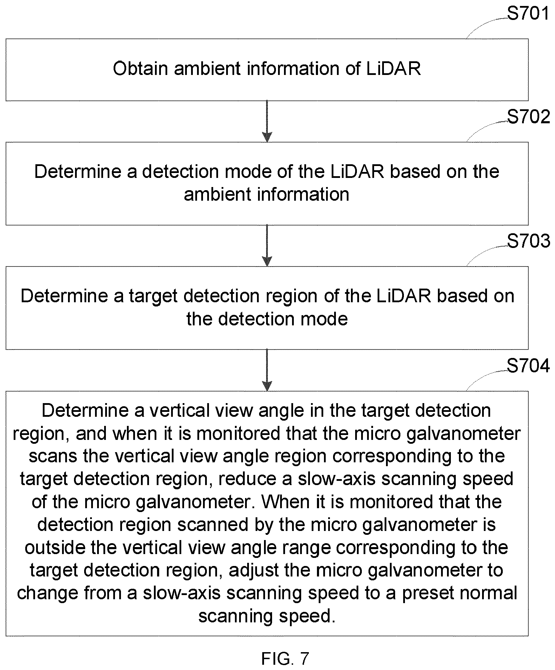

FIG. 7 shows a schematic flowchart of a detection method according to another embodiment of the present application. The method is applied to the solid-state LiDAR in FIG. 6. As shown in FIG. 7, the method includes the following steps:
S701. Obtain ambient information of a LiDAR.

The ambient information of the LiDAR includes operating speed information of a vehicle of the LiDAR and characteristic information of an object detected by the LiDAR. The characteristic information of the object includes geometric position information of the object, speed information of the object, category information of the object, information about the number of objects, and the like.

S702. Determine a detection mode of the LiDAR based on the ambient information.

The detection mode of the LiDAR includes a far-field detection mode and a near-field detection mode.

In an optional embodiment, determining a detection mode of the LiDAR based on the ambient information includes: obtaining the speed information of the vehicle carrying the LiDAR; and when a duration in which the speed information of the vehicle carrying the LiDAR is greater than or equal to a first preset value reaches a preset duration, adjusting the LiDAR to operate in the far-field detection mode; or when a duration in which the speed information of the vehicle is less than the first preset value reaches the preset duration, adjusting the LiDAR to operate in the near-field detection mode.

In another optional embodiment, determining a detection mode of the LiDAR based on the ambient information includes: determining an operating scenario of the LiDAR based on the characteristic information of the object detected by the LiDAR; and determining the detection mode of the LiDAR based on the operating scenario.

Determining an operating scenario of the LiDAR based on the characteristic information of the object detected by the LiDAR includes: obtaining category information of the object detected by the LiDAR; inputting the category information of the object into a trained neural network model to determine a scenario output value; and determining the operating scenario of the LiDAR based on the scenario output value.

It can be understood that determining the detection mode of the LiDAR based on the operating scenario includes: when the operating scenario is an expressway, determining that the detection mode of the LiDAR is the far-field detection mode; or when the operating scenario is an urban road, determining that the detection mode of the LiDAR is the near-field detection mode.

In another optional embodiment, determining a detection mode of the LiDAR based on the ambient information includes: obtaining the characteristic information of the object detected by the LiDAR; determining the number of obstacles within a preset distance around the LiDAR and a speed of the obstacle within the preset distance based on the characteristic information of the object; obtaining the operating speed of the vehicle carrying the LiDAR; and if the operating speed is greater than or equal to a first preset value, the number of the obstacles within the preset distance is less than a second preset value, and the speed of the obstacle within the preset distance is greater than or equal to the first preset value, determining that the LiDAR is in the far-field detection mode; if the operating speed is greater than or equal to the first preset value, the number of the obstacles within the preset distance is greater than or equal to the second preset value, or the speed of the obstacle within the preset distance is less than the first preset value, determining that the LiDAR is in the near-field detection mode; if the operating speed is less than the first preset value, the number of the obstacles within the preset distance is greater than or equal to the second preset value, or the speed of the obstacle within the preset distance is less than the first preset value, determining that the LiDAR is in the near-field detection mode; or if the operating speed is less than the first preset value, the number of the obstacles within the preset distance is less than the second preset value, and the speed of the obstacle within the preset distance is greater than or equal to the first preset value, determining that the LiDAR is in the far-field detection mode.

S703. Determine a target detection region of the LiDAR based on the detection mode.

Determining a target detection region of the LiDAR based on the detection mode includes:
if the LiDAR is in the far-field detection mode, determining that the target detection region is a first detection region, where as denoted by 401 in FIG. 4a, the first detection region is the first vertical view angle corresponding to a middle-to-far detection field of view; or
if the LiDAR is in the near-field detection mode, determining that the target detection region is a second detection region, where as denoted by 402 in FIG. 4b, the first detection region is a region near the vehicle of the LiDAR and an ambient ground.

S704. Determine a vertical view angle in the target detection region, and when it is monitored that the galvanometer scans the vertical view angle region corresponding to the target detection region, reduce a slow-axis scanning speed of the galvanometer; or when it is monitored that the detection region scanned by the galvanometer is outside the vertical view range corresponding to the target detection region, adjust the galvanometer to change from the slow-axis scanning speed to a preset normal scanning speed.

The detection range of the solid-state LiDAR is a horizontal angle of view of 120° (-60° to +60°) and a vertical view angle of 25° (-12.5° to +12.5°). The vertical view angle corresponding to the target detection region is in the range of 25° (-12.5° to +12.5°).

The method further includes: determining a lower boundary and an upper boundary corresponding to the vertical view angle corresponding to the target detection region; determining a first vertical view angle corresponding to the upper boundary; and determining a second vertical view angle corresponding to the lower boundary. It can be understood that the vertical view angle corresponding to the target detection region is equal to the first vertical view angle minus the second vertical view angle.

In another optional embodiment of this application, the method further includes: obtaining characteristic information of an object in the target region; and further adjusting the working parameters based on the characteristic information of the object in the target region.

It can be understood that after the working parameter of the LiDAR is determined, when the LiDAR is actually working, the working parameter of the target detection region can also be further adjusted based on the number of obstacles in the actual target detection region and the speed information of the obstacle.

As an optional manner, for example, the determined target detection region may be divided into N detection sub-regions, and the working parameter of the LiDAR is further adjusted based on the number of obstacles in each detection sub-region and the speed information of the obstacle.

It can be understood that, taking the solid-state LiDAR as an example, if the number of obstacles in an m^{th} detection sub-region exceeds a third preset value and a speed of the obstacle exceeds a fourth preset value, the speed of the optical scanning member corresponding to the m^{th} detection sub-region is further reduced, or scanning time of the optical scanning member within a range corresponding to the m^{th} sub-region is increased.

It can be understood that, in another optional embodiment of this application, in actual application, the LiDAR can also determine a drivable region based on the obtained point cloud data, and the target detection region corresponding to the detection mode is further adjusted based on the drivable region.

In the embodiments of this application, the ambient information of the LiDAR is obtained, the detection mode of the LiDAR is determined based on the ambient information, the target detection region of the LiDAR is determined based on the detection mode, the working parameter of the LiDAR is determined based on the target detection region, and the working parameter is applied to perform regional detection. The detection mode of the LiDAR can be determined based on different ambient information, the target detection region of the LiDAR is also adjusted based on the detection mode, and the working parameter of the LiDAR is automatically adjusted based on the target detection region, so that a working state of the LiDAR is automatically changed to a working state suitable for current ambience, thereby improving detection flexibility of the LiDAR and also improving detection accuracy of the LiDAR in the target detection region and working efficiency of the LiDAR.

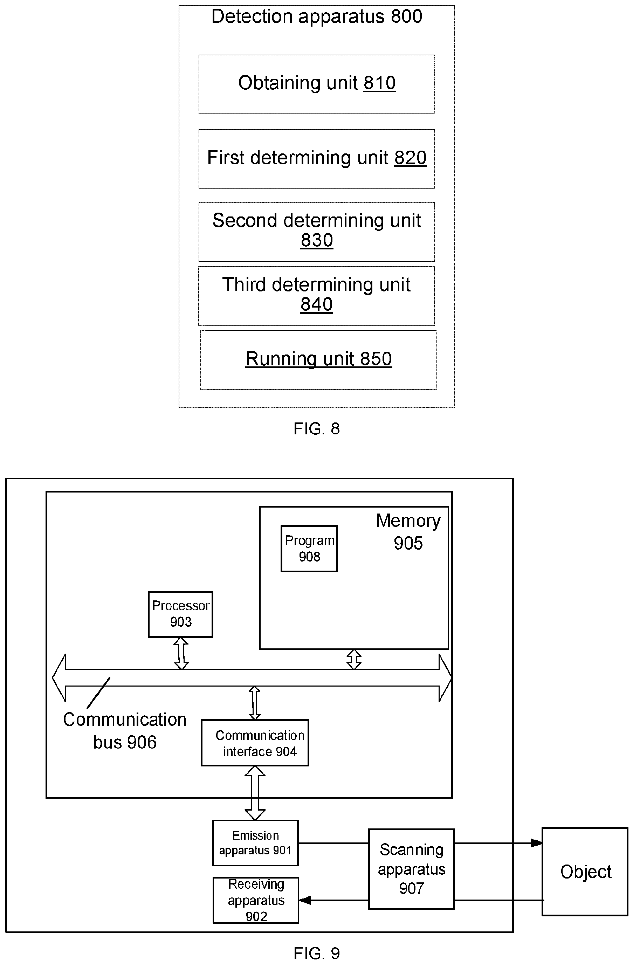

FIG. 8 shows a schematic structural diagram of a detection apparatus according to an embodiment of the present application. The apparatus can be applied to LiDAR or a LiDAR system in the foregoing embodiments. As shown in FIG. 8, the apparatus 800 includes an ambient information obtaining unit 810, a determining unit 820, and a running unit 830.

The obtaining unit 810 is configured to obtain ambient information of a LiDAR, where
the ambient information includes operating speed information of a vehicle of the LiDAR and characteristic information of an object detected by the LiDAR.

The first determining unit 820 is configured to determine a detection mode of the LiDAR based on the ambient information, where
the detection mode includes a far-field detection mode and a near-field detection mode.

The second determining unit 830 is configured to determine a target detection region of the LiDAR based on the detection mode.

The third determining unit 840 is configured to determine a scanning parameter of the LiDAR based on the target detection region.

The running unit 850 is configured to apply the scanning parameter to perform regional detection.

In some optional embodiments, the first determining unit 820 is specifically further configured to: obtain the speed information of the vehicle carrying the LiDAR; and when a duration in which the speed information of the vehicle carrying the LiDAR is greater than or equal to a first preset value reaches a preset duration, adjust the LiDAR to operate in the far-field detection mode; or when a duration in which the speed information of the vehicle is less than the first preset value reaches the preset duration, adjust the LiDAR to operate in the near-field detection mode.

In some other optional embodiments, the first determining unit 820 is specifically further configured to: determine an operating scenario of the LiDAR based on the characteristic information of the object detected by the LiDAR; and determine the detection mode of the LiDAR based on the operating scenario.

In some other optional embodiments, the first determining unit 820 is specifically further configured to: when the operating scenario is an expressway, determine that the detection mode of the LiDAR is the far-field detection mode; or when the operating scenario is an urban road, determine that the detection mode of the LiDAR is the near-field detection mode.

In some other optional embodiments, the first determining unit 820 is specifically further configured to: obtain the characteristic information of the object detected by the LiDAR; and determine the number of obstacles within a preset distance around the LiDAR and a speed of the obstacle within the preset distance based on the characteristic information of the object; and
obtain the operating speed of the vehicle carrying the LiDAR; and if the operating speed is greater than or equal to a first preset value, the number of the obstacles within the preset distance is less than a second preset value, and the speed of the obstacle within the preset distance is greater than or equal to the first preset value, determine that the LiDAR is in the far-field detection mode; if the operating speed is greater than or equal to the first preset value, the number of the obstacles within the preset distance is greater than or equal to the second preset value, or the speed of the obstacle within the preset distance is less than the first preset value, determine that the LiDAR is in the near-field detection mode; if the operating speed is less than the first preset value, the number of the obstacles within the preset distance is greater than or equal to the second preset value, or the speed of the obstacle within the preset distance is less than the first preset value, determine that the LiDAR is in the near-field detection mode; or if the operating speed is less than the first preset value, the number of the obstacles within the preset distance is less than the second preset value, and the speed of the obstacle within the preset distance is greater than or equal to the first preset value, determine that the LiDAR is in the far-field detection mode.

In some other optional embodiments, the second determining unit 830 is specifically further configured to: if the LiDAR is in the far-field detection mode, determine that the target detection region is a first detection region; or if the LiDAR is in the near-field detection mode, determine that the target detection region is a second detection region.

In some other optional embodiments, when the LiDAR is a solid-state LiDAR, the working parameter includes a scanning parameter of an optical scanning apparatus of the LiDAR; and the third determining unit 840 is specifically further configured to: determine a vertical view range in the target detection region; and reduce a scanning speed of the optical scanning apparatus within the vertical view range based on the vertical view range; or increase scanning time of the optical scanning apparatus within the vertical view range based on the vertical view range.

In some other optional embodiments, when the LiDAR is mechanical LiDAR, working parameters are pulse emitting frequency, an optical direction of an emitted laser beam, scanning frequency of the LiDAR, and a vertical view angle of the mechanical LiDAR; and the third determining unit 840 is specifically configured to: when the LiDAR operates in the far-field detection mode, determine that the target detection region is the first detection region, that is, a detection region corresponding to a middle-to-far detection field of view, reduce a vertical view angle of the LiDAR, reduce pulse emitting frequency of the LiDAR for emitting a laser beam, and increase scanning frequency of the LiDAR; or when the LiDAR operates in the near-field detection mode, determine that the target detection region is the second detection region, that is, a detection region corresponding to a near detection field of view, increase the pulse emitting frequency of the LiDAR, lower the optical direction of the emitted laser beam of the LiDAR, and increase the scanning frequency of the LiDAR.

It should be noted that the detection apparatus provided in this embodiment of the present application is an apparatus that can execute the foregoing detection method shown in FIG. 3. All embodiments of the foregoing detection method are applicable to the apparatus, and can achieve the same or similar beneficial effects.

In the embodiments of this application, the ambient information of the LiDAR is obtained, the detection mode of the LiDAR is determined based on the ambient information, the target detection region of the LiDAR is determined based on the detection mode, the working parameter of the LiDAR is determined based on the target detection region, and the working parameter is applied to perform regional detection. The detection mode of the LiDAR can be determined based on different ambient information, the target detection region of the LiDAR is also adjusted based on the detection mode, and the working parameter of the LiDAR is automatically adjusted based on the target detection region, so that a working state of the LiDAR is automatically changed to a working state suitable for current ambience, thereby improving detection flexibility of the LiDAR and also improving detection accuracy of the LiDAR in the target detection region and working efficiency of the LiDAR.

An embodiment of the present application also provides a computer storage medium. At least one executable instruction is stored in the computer storage medium. The executable instruction causes the processor to execute the steps of the foregoing method for adjusting the parameters of the LiDAR.

The embodiment of the present application also provides a computer program product, including a computer program stored on a computer storage medium. The computer program includes program instructions. When the program instructions are executed by a computer, the computer program executes the foregoing method for adjusting the parameters of the LiDAR in any of the foregoing method embodiments.

FIG. 9 shows a schematic structural diagram of a LiDAR according to an embodiment of the present application. Specific embodiments of the present application impose no limitation on specific implementation of the LiDAR.

As shown in FIG. 9, the LiDAR can include: an emission apparatus 901, a receiving apparatus 902, a processor 903, a communication interface 904, a memory 905, a communication bus 906, a scanning apparatus 907, and a program 908.

The emission apparatus 901 is configured to emit an outgoing laser beam to a detection region, and the receiving apparatus 902 is configured to receive an echo laser beam reflected by an object in the detection region. The emission apparatus 901 is specifically configured to scan and emit the outgoing laser beam to the detection region to scan an object in the detection region.

The scanning apparatus 907 is configured to deflect a detection laser beam to implement scanning.

When the LiDAR is a mechanical LiDAR, the scanning apparatus 907 is a rotary drive apparatus; and the scanning apparatus 907 is configured to drive the emission apparatus 901 and the receiving apparatus 902 to rotate to implement scanning.

When the LiDAR is solid-state LiDAR, the scanning apparatus 907 is the optical scanning apparatus, and the optical scanning apparatus is configured to deflect the detection laser beam to implement scanning, and also configured to receive an echo laser beam and deflect the echo laser beam to the receiving module. The optical scanning apparatus 907 may be, for example, a galvanometer scanning apparatus.

The processor 903, the communication interface 904, and the memory 905 communicate with each other via the communication bus 906. The communication interface 904 is configured to communicate with another device such as a client, or another network element such as another server. The processor 903 is connected to the emission apparatus 901 via the communication interface 904, and configured to execute the program 908, which can specifically execute the foregoing detection method in any one of the foregoing method embodiments.

Specifically, the program 908 can include program code, and the program code includes computer operation instructions.

The processor 903 can be a central processing unit (CPU), or Application Specific Integrated Circuit (ASIC), or one or more integrated circuits configured to implement the embodiments of the present application. One or more processors included in the computing device can be of the same type of processor, such as one or more CPUs, or different types of processors, such as one or more CPUs and one or more ASICs.

The memory 905 is configured to store the program 908. The memory 905 can include a high-speed RAM memory, and can also include a non-volatile memory (non-volatile memory), for example, at least one magnetic disk memory.

In the embodiments of this application, the ambient information of the LiDAR is obtained, the detection mode of the LiDAR is determined based on the ambient information, the target detection region of the LiDAR is determined based on the detection mode, the working parameter of the LiDAR is determined based on the target detection region, and the working parameter is run to perform regional detection. The detection mode of the LiDAR can be determined based on different ambient information, the target detection region of the LiDAR is also adjusted based on the detection mode, and the working parameter of the LiDAR is automatically adjusted based on the target detection region, so that a working state of the LiDAR is automatically changed to a working state suitable for current ambience, thereby improving detection flexibility of the LiDAR and also improving detection accuracy of the LiDAR in the target detection region and working efficiency of the LiDAR.

The algorithms or displays provided here are not inherently related to any particular computer, virtual system or other equipment. Various general-purpose systems can also be used with the teaching based on this. Based on the foregoing description, the structure required to construct this type of system is obvious. In addition, the embodiments of the present application are not directed to any specific programming language. It should be understood that various programming languages can be used to implement the content of the present application described herein, and the foregoing description of a specific language is for the objective of disclosing the best embodiment of the present application.

In the specification provided here, a lot of specific details are described. However, it can be understood that embodiments of the present application can be practiced without these specific details. In some instances, common methods, structures, and technologies are not shown in detail, so as not to obscure the understanding of this specification.

Similarly, it should be understood that to streamline the present application and help understand one or more of the various inventive aspects, in the foregoing description of the exemplary embodiments of the present application, the various features of the embodiments of the present application are sometimes grouped together into a single implementation, example, diagram, or description. However, the disclosed method should not be interpreted as reflecting the intention that the claimed application requires more features than those explicitly stated in each claim. More precisely, as reflected in the following claims, the inventive aspect is less than all the features of a single embodiment disclosed previously. Therefore, the claims following the specific embodiment are thus explicitly incorporated into the specific embodiment, where each claim itself serves as a separate embodiment of the present application.

The person skilled in the art can understand that it is possible to adaptively change the modules in a device in the embodiment. The modules can be arranged in one or more devices different from the embodiment. The modules or units or assemblies in the embodiments can be combined into one module or unit or assembly. In addition, the modules or units or assemblies can be divided into a plurality of sub-modules or sub-units or sub-assemblies. Except that at least some of such features and/or processes or units are mutually exclusive, any combination can be configured to apply any combination to all features disclosed in this specification (including the accompanying claims, abstract and drawings) and all the processes or units of any method or the apparatus disclosed in this manner. Unless expressly stated otherwise, each feature disclosed in this specification (including the accompanying claims, abstract and drawings) can be replaced by an alternative feature that serves the same, equivalent or similar objective.

In addition, the person skilled in the art can understand that although some embodiments herein include certain features included in other embodiments but not other features, the combination of features of different embodiments means that the combinations of features of different embodiments fall within the scope of the present application and form different embodiments. For example, in the following claims, any one of the claimed embodiments can be used in any combination.

It should be noted that the foregoing embodiments illustrate rather than limit the present application, and the person skilled in the art can design alternative embodiments without departing from the scope of the appended claims. In the claims, any reference signs positioned between parentheses should not be constructed as a limitation to the claims. The word "including" does not exclude the presence of elements or steps not listed in the claims. The word "a" or "an" in front of an element does not exclude the presence of a plurality of such elements. The application can be implemented by means of hardware including a plurality of different elements and by means of a suitably programmed computer. In the unit claims enumerating a plurality of devices, a plurality of these devices can be embodied by the same hardware item. The use of the words "first, second, and third", etc. do not indicate any order. These words can be interpreted as names. Unless otherwise specified, the steps in the foregoing embodiments should not be understood as a limitation on an execution order.

## Claims

1. A detection method, comprising:
obtaining ambient information of a LiDAR;
determining a detection mode of the LiDAR based on the ambient information;
determining a target detection region of the LiDAR based on the detection mode;
determining a working parameter of the LiDAR based on the target detection region; and
applying, by the LiDAR, the working parameter to perform regional detection.

2. The method according to claim 1, wherein
the ambient information comprises speed information of a vehicle carrying the LiDAR and characteristic information of an object detected by the LiDAR; and
the detection mode comprises a far-field detection mode and a near-field detection mode.

3. The method according to claim 2, wherein determining the detection mode of the LiDAR based on the ambient information comprises:
obtaining the speed information of the vehicle carrying the LiDAR; and
when a duration in which the speed information of the vehicle carrying the LiDAR is greater than or equal to a first preset value reaches a preset duration, adjusting the LiDAR to operate in the far-field detection mode; and
when a duration in which the speed information of the vehicle carrying the LiDAR is less than the first preset value reaches the preset duration, adjusting the LiDAR to operate in the near-field detection mode.

4. The method according to claim 2, wherein determining the detection mode of the LiDAR based on the ambient information comprises:
determining an operating scenario of the LiDAR based on the characteristic information of the object detected by the LiDAR; and
determining the detection mode of the LiDAR based on the operating scenario.

5. The method according to claim 4, wherein determining the detection mode of the LiDAR based on the operating scenario comprises:
when the operating scenario is an expressway, determining that the detection mode of the LiDAR is the far-field detection mode; and
when the operating scenario is an urban road, determining that the detection mode of the LiDAR is the near-field detection mode.

6. The method according to claim 2, wherein determining the detection mode of the LiDAR based on the ambient information comprises:
obtaining the characteristic information of the object detected by the LiDAR;
determining a number of obstacles within a preset distance around the LiDAR and a speed of the obstacle within the preset distance based on the characteristic information of the object;
obtaining an operating speed of the vehicle carrying the LiDAR; and
when the operating speed is greater than or equal to a first preset value, and when the number of the obstacles within the preset distance is less than a second preset value, and the speed of the obstacle within the preset distance is greater than or equal to the first preset value, determining that the LiDAR is in the far-field detection mode;
when the operating speed is greater than or equal to the first preset value, and when the number of the obstacles within the preset distance is greater than or equal to the second preset value, or the speed of the obstacle within the preset distance is less than the first preset value, determining that the LiDAR is in the near-field detection mode;
when the operating speed is less than the first preset value, and when the number of the obstacles within the preset distance is greater than or equal to the second preset value, or the speed of the obstacle within the preset distance is less than the first preset value, determining that the LiDAR is in the near-field detection mode; and
when the operating speed is less than the first preset value, and when the number of the obstacles within the preset distance is less than the second preset value, and the speed of the obstacle within the preset distance is greater than or equal to the first preset value, determining that the LiDAR is in the far-field detection mode.

7. The method according to claim 2, wherein determining the target detection region of the LiDAR based on the detection mode comprises:
when the LiDAR is in the far-field detection mode, determining that the target detection region is a first detection region; or
when the LiDAR is in the near-field detection mode, determining that the target detection region is a second detection region.

8. The method according to claim 1, wherein
when the LiDAR is a solid-state LiDAR, the working parameter comprises a scanning parameter of an optical scanning apparatus of the LiDAR; and
determining the scanning parameter of the LiDAR based on the target detection region comprises:
determining a vertical view range in the target detection region; and
reducing a scanning speed of the optical scanning apparatus within the vertical view range based on the vertical view range; or
increasing scanning time of the optical scanning apparatus within the vertical view range based on the vertical view range.

9. The method according to claim 1, wherein
when the LiDAR is a mechanical LiDAR, the working parameter comprises pulse emitting frequency, an optical direction of an emitted laser beam, scanning frequency of the LiDAR, and a vertical view angle of the mechanical LiDAR; and
determining the working parameter of the LiDAR based on the target detection region comprises:
when the LiDAR operates in the far-field detection mode, determining that the target detection region is the first detection region, that is, a detection region corresponding to a middle-to-far detection field of view, reducing a vertical view angle of the LiDAR, reducing pulse emitting frequency of the LiDAR for emitting a laser beam, and increasing scanning frequency of the LiDAR; or
when the LiDAR operates in the near-field detection mode, determining that the target detection region is the second detection region, that is, a detection region corresponding to a near detection field of view, increasing the pulse emitting frequency of the LiDAR, lowering the optical direction of the emitted laser beam of the LiDAR, and increasing the scanning frequency of the LiDAR.

10. The method according to claim 1, wherein the method further comprises:
obtaining characteristic information of an object in the target detection region; and
further adjusting the working parameters based on the characteristic information of the object in the target detection region.

11. A detection apparatus, comprising:
an obtaining unit, configured to obtain ambient information of a LiDAR;
a determining unit, configured to determine a detection mode of the LiDAR based on the ambient information, wherein
the determining unit is further configured to determine a target detection region of the LiDAR based on the detection mode, and
the determining unit is further configured to determine a scanning parameter of the LiDAR based on the target detection region; and
a running unit, configured to apply the scanning parameter to perform regional detection.

12. A LiDAR, comprising: an emission apparatus, a receiving apparatus, a scanning apparatus, a processor, a memory, a communication interface, and a communication bus, wherein the processor, the memory, and the communication interface complete mutual communication with each other via the communication bus;
the emission module, configured to emit a detection laser beam;
the receiving module, configured to receive an echo laser beam; and
the scanning apparatus, configured to deflect a detection laser beam to implement scanning, wherein
the memory is configured to store at least one executable instruction, and the executable instruction enables the processor to perform steps of the detection method according to any of claims 1-10, so that the LiDAR implements the regional detection.

13. The LiDAR according to claim 12, wherein
when the LiDAR is a mechanical LiDAR, the scanning apparatus is a rotary drive apparatus; and
the scanning apparatus is configured to drive the emission apparatus and the receiving apparatus to rotate to implement scanning.

14. The LiDAR according to claim 12, wherein
when the LiDAR is a solid-state LiDAR, the scanning apparatus is the optical scanning apparatus, and the optical scanning apparatus is configured to deflect the detection laser beam to implement scanning, and further configured to receive the echo laser beam and deflect the echo laser beam to the receiving module.

15. The LiDAR according to claim 14, wherein the optical scanning apparatus is a galvanometer scanning apparatus.
